# EUROPEAN PATENT SPECIFICATION

(11) **EP 1 520 895 B1**
(45) Date of publication and mention of the grant of the patent: **27.01.2010**
(21) Application number: 03022314.3
(22) Date of filing: 03.10.2003
(51) Int. Cl.: C09J 5/00, C08J 5/12, F16B 11/00, B64G 1/00

(54) **A method for securing a component**
Verfahren zum Verbinden eines Bauteils
Méthode pour fixer un composant

(43) Date of publication of application: 06.04.2005
(73) Proprietor: RUAG Aerospace Sweden AB, 405 15 Gothenburg (SE)
(72) Inventor: Arulf, Örjan, 58254 Linköping (SE); Brick, Stefan, 58232 Linköping (SE)
(74) Representative: Holmberg, Magnus

(56) References cited:
- WO-A-02/42152
- US-A- 4 556 592
- US-A- 4 966 802
- DANIEL GAY: "MATERIAUX COMPOSITES" 1991, HERMES , PARIS ISBN: 2-86601-116-3 * page 160 *

## Description

### TECHNICAL FIELD OF THE INVENTION AND PRIOR ART

The present invention relates to a method for securing a component having a high stiffness to a fibre composite laminate by adhesive bonding.

"High stiffness" means in this disclosure that the component or part is of a stiff nature, but it may have a lower modulus of elasticity than another component here being considered to have a low stiffness, since it is thinner than the first one. The same reasoning is valid for "lower stiffness". Accordingly, said component to be secured may be of a material having a lower modulus of elasticity than the fibre composite laminate but still have a high sitffness, when it is thick enough.

The fibre composite laminate may be of any known type, and such laminates are composed by a number of superimposed thin layers, each constituted by substantially parallel fibres embedded in a matrix, glued to each other for obtaining a body having a very high stiffness in relation to the weight thereof. The fibre composite laminate may also have a very high strength in relation to the weight thereof, but only in one direction of each layer. They are, however, comparatively weak and have a low stiffness in the direction transversal to the fibre direction. The layers are for that sake arranged with different fibre directions so as to obtain good properties in two dimensions. However, the properties will remain bad in the third direction (out of the plane of a sheet of such layers). This constitutes a problem in adhesive joints, which create a load on the laminate acting out of the plane of the laminate. The layers are arranged with different fibre directions for giving the laminate a strength being appropriate for each individual application. The layers may for instance be arranged for giving the laminate a strength being substantially uniform in said two dimensions, but they are often arranged so as to make the laminate stiffer in some direction than in another.

The use of such fibre composite laminates is particularly interesting where a combination of a low weight and a high stiffness and strength is important, such as in space.

There are certain problems to secure a component having a high stiffness to such a fibre composite laminate by adhesive bonding, and although these problems are in common for all such fibre composite laminates and components having a high stiffness these problems will now be described for the case of securing a component of aluminium to a carbon fibre composite laminate by adhesive bonding for illuminating the problems to be solved by the invention but not in any way limiting the invention thereto.

Due to the fragile character of the carbon fibre composite laminate the introductions of loads has to be carried out very carefully. Concentrations of tension and shear forces in the adhesive joint between the component and the laminate may not be avoided in spite of the good capacity of the adhesive joint to distribute the load over a large area. These concentrations of shear and tension forces occur at the border of the component, accordingly, where the overlap of the component ends. These concentrations of shear and tension forces reduce the possibility to introduce load in the same order of magnitude as the maximum load for which the laminate is dimensioned, since the laminate would then break.

It has been suggested to reduce the thickness of such components of aluminium considerably close to the border thereof to be located on the laminate after the securing thereto so as to solve the problems mentioned above. This would then result in a lower stiffness of that part of the component making the concentrations of shear and tension forces not that critical any longer. It would also be avoided to introduce higher loads into one layer of the laminate than this may withstand. However, this solution normally, although it is occasionally used, does not constitute any real option, since the extremely thin portions of the aluminium components are very difficult to manufacture and handle.

Daniel Gay: "Materiaux Composites" 1991, Hermis, Paris ISBN: 2-86601-116-3 page 166 and WO 02/42152 A disclose bolting of composite materials.

US-S-4966802 relates to composites made of fibre reinforced resin elements joined by adhesive.

US-A-4556592 concerns conductive joint seals for composite aircraft.

### SUMMARY OF THE INVENTION

The object of the present invention is to provide a method of the type defined in the introduction, which solves the problems discussed above to a large extent.

This object is according to the invention obtained by providing such a method, in which a sheet having a substantially lower stiffness than the stiffness of the component is interposed between the component and the laminate so that the sheet extends and has its border substantially beyond the border of the component where the border of the latter is located in overlap with the laminate, and the sheet is affixed by adhesive bonding to the laminate as well as the component for securing them to each other.

Accordingly, the component is secured to the laminate through said sheet having a substantially lower stiffness than the stiffness of the component. Such a sheet may without any problems be produced and adhesively bonded to the laminate, and the component may be manufactured without using any delicate process steps. Concentrations of shear and tension forces in the adhesive joint between the component and the sheet will be transferred to the adhesive joint between the sheet and the laminate at the border of the sheet while reducing these forces.

"Substantially lower stiffness" is to be interpreted as explained in the introduction. It does not necessarily mean that said sheet has a lower modulus of elasticity than the material of the component but this may even be higher and the thickness of the sheet then considerably lower. Furthermore, thanks to this substantially lower stiffness of said sheet it is efficiently avoided to introduce considerably higher load into a laminate layer than this may withstand. Accordingly, upon application of high loads the adhesive joint will rather break than the laminate, such as carbon fibres, in the laminate layer close to the sheet, which would result in a destruction of this laminate layer.

According to a preferred embodiment of the invention it is a said sheet having a stiffness in the same order of magnitude as the stiffness of a laminate layer to which it is adhesively bonded that is interposed between the component and the laminate.
This means that there will be no risk of introducing considerably higher loads into a laminate layer than this may withstand.

According to another preferred embodiment of the invention it is a component made of a metal that is secured to the fibre composite laminate, said metal preferably being aluminium, and it is a sheet of metal that is interposed between the component and the laminate. The experience and the knowledge within the field of adhesively bonding metal to metal is very broad, so that it will in such a case be comparatively easy to efficiently adhesively bond the component to said sheet. However, it is pointed out that the component must not necessarily be made of metal.

According to another preferred embodiment of the invention it is a sheet of a material having substantially the same coefficient of thermal expansion as said laminate that is interposed between the component and the laminate. This is very advantageous, especially when the coefficient of thermal expansion of the component material is quite different than that of the material of said fibre composite laminate. Such a laminate has a coefficient of thermal expansion being very low, which means that the laminate will have substantially the same dimensions even if the temperature thereof would vary substantially. However, for example aluminium has a coefficient of thermal expansion being much higher, which means that shear and tension forces are introduced into the adhesive joint between a component of aluminium and a fibre composite laminate if these are adhesively bonded to each other. By introducing a sheet of a material having substantially the same coefficient of thermal expansion as said laminate such shear and tension forces deriving from temperature fluctuations are avoided. This is preferably done by making this sheet of steel, titan or invar. Invar being an alloy of Fe and Ni appears to be the optimum choice, since the coefficient of thermal expansion thereof is nearly neglectible.

According to another preferred embodiment of the invention said component is secured to a laminate having a plurality of layers, each layer having substantially parallel carbon fibres embedded in a matrix, preferably an epoxy matrix. The method according to the invention is particularly well applicable to securing a component to such a laminate by adhesive bonding, since such a laminate has an optimum combination of weight and stiffness for being used in space, to which it then is for weight reasons preferred to secure components of aluminium resulting in the problems discussed above, but solved through the method according to the invention.

According to another preferred embodiment of the invention a plurality of said sheets are superimposed and adhesively bonded to each other and interposed between the component and the laminate as a package, and the outer sheets of said package are adhesively bonded to the component and the laminate, respectively, so that for adjacent sheets said border of the sheet closest to the component is located at a shorter distance to said border of the component than said border of the other sheet. An alternative to this, which constitutes a further preferred embodiment of the invention, is to adhesively bond a sheet having a thickness being stepwisely reduced between said border of the component and said border of the sheet to the laminate and the component. These embodiments means that the concentration of shear and tension forces at said border of the component overlapping the sheet will be stepwisely reduced in the direction towards the outermost sheet border overlapping the laminate. This means an improvement with respect to the possibility to introduce load of the same order of magnitude into the laminate as the load the laminate is dimensioned to maximally withstand.

According to another preferred embodiment of the invention the component is secured to a laminate forming a cover of reinforcement of a sandwich construction and the sheet is adhesively bonded to the laminate in the same step as the sandwich construction is cured. This results in an adhesive bonding of said sheet to the laminate by a process being well controlled and it is avoided to handle the sticky adhesive by hand. Such sandwich constructions are very advantageous for the use in space, since they constitute a construction being optimum from the weight point of view.

According to another preferred embodiment of the invention the method is carried out as a part of a process for producing a product to be used in space. Advantages of such a method appear from the discussion above.

Further advantages and preferred features of the invention appear from the following description and the other dependent claims.

### BRIEF DESCRIPTION OF THE DRAWINGS

With reference to the appended drawings below follows a specific description of preferred embodiments of the invention cited as examples.

### In the drawings:

- Fig 1: is a schematic cross section view illustrating a method for securing a component to a fibre composite laminate according to the prior art,
- Fig 2: is a simplified view illustrating how a component is secured by adhesively bonding to a fibre composite laminate according to a preferred embodiment of the invention,
- Fig 3: is an enlarged cross section view of a portion III of Fig 2,
- Fig 4: is a view corresponding to Fig 3 illustrating a method according to another preferred embodiment of the invention,
- Fig 5: is a view corresponding to Fig 3 illustrating a method according to a further preferred embodiment of the invention, and
- Fig 6: is a perspective and sectioned view through a sandwich construction to which a method according to a further preferred embodiment of the invention is applied.

### BRIEF DESCRIPTION OF PRIOR ART

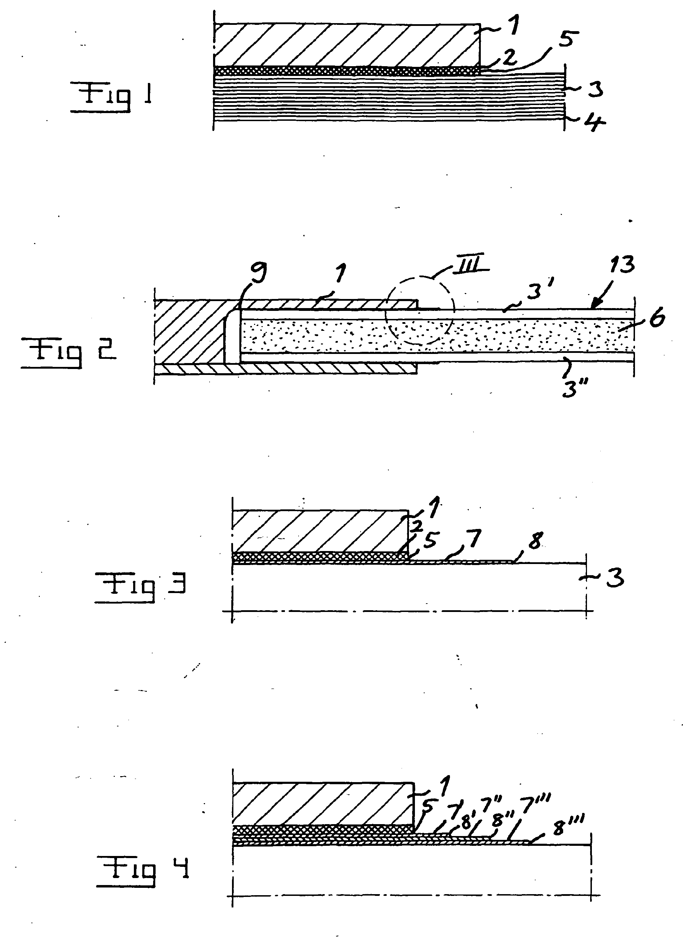

It is schematically illustrated in Fig 1 how a component 1 of for example aluminium having a high stiffness is adhesively bonded through an adhesive joint 2 to a fibre composite laminate 3. This laminate is composed by a plurality of superimposed layers 4 each having substantially parallel fibres embedded in a matrix. A typical thickness of such a layer 4 is 0.1-0.3 mm. The material of these layers may for instance be carbon fibres embedded in an epoxy matrix, glass fibres embedded in a polyester matrix or kevlar fibres embedded in a matrix. Concentrations of shear and tension forces in the adhesive joint will appear at the border 5 of the component where the border of the latter is located in overlap with the laminate. Such concentrations reduce the possibility to introduce load into the laminate in the same order of magnitude as the load for which the laminate is dimensioned. Furthermore, a substantial difference of the coefficient of thermal expansion of the material of the component with respect to the material of the laminate 3 results in a risk of introducing stresses destroying the adhesive joint or the laminate layer closest thereto when the temperature is changed substantially.

### DETAILED DESCRIPTION OF PREFERRED EMBODIMENTS OF THE INVENTION

A method for securing a component having a high stiffness to a fibre composite laminate by adhesive bonding according to the invention is illustrated through Figs 2 and 3. The component 1 is here secured to a laminate 3', 3" forming a cover of reinforcement of a sandwich construction 13 on the respective side of an intermediate core material 6 of a comparatively low stiffness and strength. It is illustrated how a sheet 7 having, thanks to a much lower thickness than the thickness of the component 1, a substantially lower stiffness than the stiffness of the component is interposed between the component and the laminate so that the sheet extends and has its border 8 substantially beyond the border 5 of the component where the border of the latter is located in overlap with the laminate. The sheet is affixed by adhesively bonding to the laminate as well as to the component for securing them to each other. The distance between the border 8 of the sheet and that 5 of the component may typically be in the order of 2-8 mm. The sheet may typically have a thickness of 0.5-2 mm. The sheet 7 has preferably a stiffness in the same order of magnitude as the stiffness of a laminate layer to which it is adhesively bonded, which means that it is avoided to introduce considerably higher loads into the laminate layer than it may withstand. Furthermore, concentrations of shear and tension forces at the end of the adhesive joint at 5 are transferred to the sheet 7 and results in lower shear and tension forces in the region of the border 8. The sheet is preferably adhesively bonded to the sandwich construction in the same step as this is cured under high temperatures and pressures in a so-called autoclave. The low thickness of the sheet 7 makes it possible to handle it as if it would be a prepreg piece easy to handle. The sheet shall accordingly have a substantially lower stiffness than the stiffness of the component, and have substantially the same coefficient of thermal expansion as the laminate. Steel, titan or invar are preferred materials for the sheet in the case of a laminate of carbon fibre epoxy. Invar appears to be most preferred with respect to the coefficient of thermal expansion being nearly zero, especially when the Ni portion thereof is about 36 percent by weight. A component 1 of aluminium or another metal may be affixed by adhesive bonding through traditional adhesive joints and methods.

Fig 4 illustrates how a plurality of said sheets 7', 7", 7"' are superimposed and adhesively bonded to each other and interposed between the component and the laminate as a package according to another preferred embodiment of the method according to the invention. The outer sheets 7', 7'" of said package are adhesively bonded to the component and the laminate, respectively, so that for adjacent sheets said border 8', 8" of the sheet closest to the component is located at a shorter distance to said border 5 of the component than said border 8", 8"' of the other sheet. The concentration of shear and tension forces at the border of the adhesive joint between the component and the sheet is by this reduced at each step so formed for making these forces low in the adhesive joint between the sheet 8"' and the laminate 3.

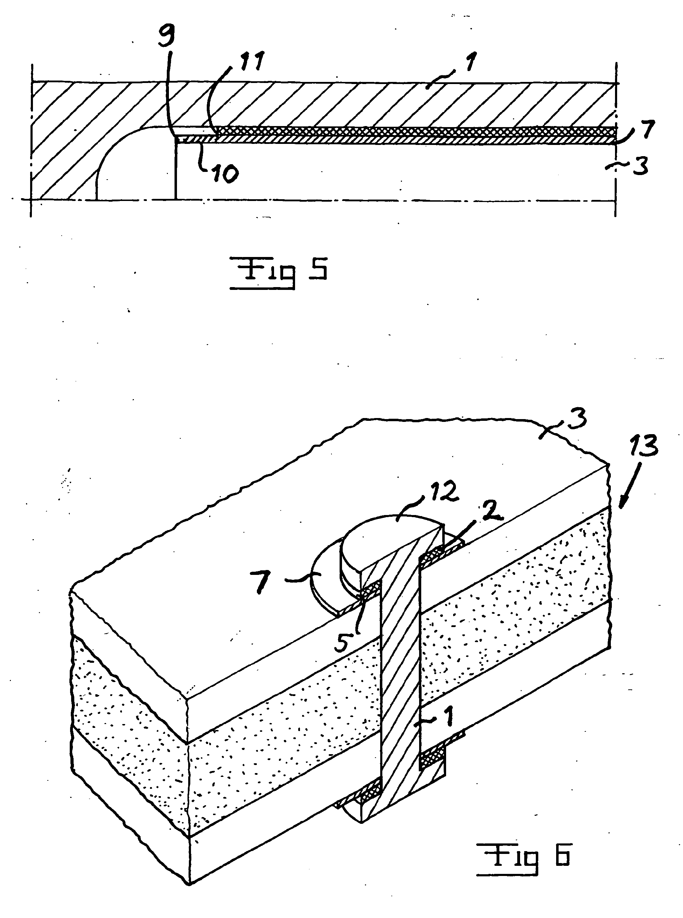

It is shown in Fig 2 how the component is secured to the laminate close to a border 9 thereof so that is projects beyond the border of the laminate. A preferred way to proceed in such a case is illustrated in Fig 5. It is shown how a sheet 7 is adhesively bonded to the laminate 3 so that a portion 10 thereof will be located in the region near said border 9 of the laminate, so that the component 1 is adhesively bonded to a surface of the sheet ending at a distance from said border of the laminate. This means that concentration of shear and tension forces at the adhesive joint border 11 between the component and the sheet will be distributed over a larger area and result in lower shear and tension forces next to the laminate at the border 9. The sheet (7) may be adhesively bonded to the laminate (3) so that a portion (10) thereof with a reduced thickness with respect to the rest of the sheet will be located in the region near said border (9) of the laminate, so that the component is adhesively bonded to a surface of the sheet ending at a distance from said border of the laminate.

It is illustrated in Fig 6 how the method according to the invention may be used for securing a so-called insert 12 to a sandwich construction 13. This component is introduced through the thickness of the sandwich construction, and a said sheet 7 having the character of a washer is used when securing the insert to an outer surface of the sandwich construction formed by a said laminate. It is pointed out that this figure is very simplified and used only for illustrating the method according to the invention, and the component 1 may of course in the practice have an arbitrary extension and design on the respective side of the sandwich construction.

The invention is of course not in any way restricted to the preferred embodiments described above, but many possibilities to modifications thereof will be apparent to a person with ordinary skill in the art without departing from the scope of the appended claims.

The invention is not restricted to the order of adhesively bonding the different pieces to each other described above, but this order may be different, so that the component may be adhesively bonded to said sheet simultaneously as the sheet is adhesively bonded to the laminate.

The component may be adhesively bonded to a surface portion of the laminate distant from any border of the laminate.

The lower stiffness of the sheet than of the component is preferably obtained by using a lower thickness for the former, such as less than ½ or ¼ of the thickness of the component. However, it is conceivable to use a material having a substantially lower modulus of elasticity and the same thickness for the sheet or combining these features for obtaining said substantially lower stiffness.

## Claims

1. A method for securing a component (1) having a high stiffness to a fibre composite laminate (3) by adhesive bonding, ***characterized* in that** a sheet (7) having a substantially lower stiffness than the stiffness of the component (1) is interposed between the component (1) and the laminate (3) so that the sheet (7) extends and has its border (8) substantially beyond the border (5) of the component (1) where the border (8) of the latter is located in overlap with the laminate (3), and that the sheet (7) is affixed by adhesively bonding to the laminate (3) as well as the component (1) for securing them to each other.

2. A method according to claim 1, ***characterized* in that** it is a said sheet (7) having a stiffness in the same order of magnitude as the stiffness of a laminate layer (4) to which it is adhesively bonded that is interposed between the component (1) and the laminate (3).

3. A method according to claim 1 or 2, ***characterized* in that** the lower stiffness of said sheet (7) in relation to said component (1) is substantially obtained by using a sheet (7) having a substantially lower thickness than the component (1) close to said border (5) thereof, advantageously a thickness being less than ½ and preferably less than ¼ of said thickness of the component (1).

4. A method according to any of the preceding claims, ***characterized* in that** it is a component (1) made of a metal that is secured to the fibre composite laminate (3).

5. A method according to claim 4, ***characterized* in that** it is a component (1) made of aluminium that is secured to the fibre composite laminate (3).

6. A method according to any of the preceding claims, ***characterized* in that** it is a sheet (7) of metal that is interposed between the component (1) and the laminate (3).

7. A method according to any of the preceding claims, ***characterized* in that** it is a sheet (7) of a material having substantially the same coefficient of thermal expansion as said laminate (3) that is interposed between the component (1) and the laminate (3).

8. A method according to any of the preceding claims, ***characterized* in that** it is a sheet (7) of steel, titan or invar that is interposed between the component (1) and the laminate (3).

9. A method according to any of the preceding claims, ***characterized* in that** said component (1) is secured to a laminate (3) having a plurality of layers (4), each layer (4) having substantially parallel carbon fibres embedded in a matrix.

10. A method according to claim 9, ***characterized* in that** said component (1) is secured to a carbon fibre epoxy laminate (3).

11. A method according to any of the preceding claims, ***characterized* in that** the component (1) is secured to a glass fibre polyester laminate (3).

12. A method according to any of the preceding claims, ***characterized* in that** a plurality of said sheets (7', 7", 7"') are superimposed and adhesively bonded to each other and interposed between the component (1) and the laminate (3) as a package, and that the outer sheets (7', 7"') of said package are adhesively bonded to the component (1) and the laminate (3), respectively, so that for adjacent sheets said border (8', 8") of the sheet (7', 7") closest to the component (1) is located at a shorter distance to said border (5) of the component than said border (8", 8"') of the other sheet (7", 7"').

13. A method according to any of claims 1-11, ***characterized* in that** a sheet (7) having a thickness being stepwisely reduced between said border (5) of the component and said border (8) of the sheet is adhesively bonded to the laminate (3) and the component (1).

14. A method according to any of the preceding claims, ***characterized* in that** it is a sheet (7) having a thickness of 0.5-2 mm that is interposed between the component (1) and the laminate (3) and so that the distance of said border (8) of the sheet (7) to said border (5) of the component (1) is at least 2 mm, preferably 2-8 mm.

15. A method according to any of the preceding claims, ***characterized* in that** the sheet (7) is in a step fixed to the laminate (3) by adhesively bonding and the component (1) is in a subsequent separate step fixed to the sheet (7) by adhesive bonding.

16. A method according to any of the preceding claims, ***characterized* in that** the component (1) is secured to a laminate (3) forming a cover of reinforcement of a sandwich construction (13).

17. A method according to claims 15 and 16, ***characterized* in that** the sheet (7) is adhesively bonded to the laminate (3) in the same step as the sandwich construction (13) is cured.

18. A method according to claim 16 or 17, ***characterized* in that** said component is a so-called insert (12) introduced through the thickness of said sandwich construction (13), and that a said sheet (7) having the character of a washer is used when securing the insert to an outer surface of the sandwich construction formed by a said laminate (3).

19. A method according to any of claims 1-17, ***characterized* in that** said component (1) is secured to the laminate (3) close to a border (9) thereof so that it projects beyond the border (9) of the laminate (3').

20. A method according to claim 19, ***characterized* in that** a said sheet (7) is adhesively bonded to the laminate (3) so that a portion (10) thereof with a reduced thickness with respect to the rest of the sheet (7) will be located in the region near said border (9) of the laminate, so that the component is adhesively bonded to a surface of the sheet (7) ending at a distance from said border (9) of the laminate.

21. Use of the method according to any of the preceding claims, as a part of a process for producing a product to be used in space.

## Patentansprüche

1. Verfahren zum Sichern einer eine hohe Steifigkeit aufweisenden Komponente (1) an einem Faserverbundlaminat (3) durch eine adhäsive Bindung, **dadurch gekennzeichnet, dass** eine, eine im Wesentlichen geringere Steifigkeit als die Steifigkeit der Komponente (1) aufweisende Folie (7) derart zwischen die Komponente (1) und das Laminat (3) eingefügt wird, dass die Folie (7) ihre Grenze (8) im Wesentlichen jenseits die Grenze (5) der Komponente
(1) erstreckt und aufweist, wobei die Grenze (8) der letzteren überlappend mit dem Laminat (3) gelegen ist, und **dadurch**, dass die Folie (7) durch eine adhäsive Bindung sowohl am Laminat (3) als auch an der Komponente
(1) angebracht ist, um sie zueinander zu sichern.

2. Verfahren gemäß Anspruch 1, **dadurch gekennzeichnet, dass** es die eine Steifigkeit in der gleichen Größenordnung wie die Steifigkeit einer Laminatlage (4), zu der sie adhäsiv gebunden ist, aufweisende Folie (7) ist, die zwischen die Komponente (1) und das Laminat (3) eingefügt wird.

3. Verfahren gemäß Anspruch 1 oder 2, **dadurch gekennzeichnet, dass** die geringere Steifigkeit der Folie (7) in Rekation zur Komponente (1) im Wesentlichen durch Verwenden einer eine im Wesentlichen geringere Dicke als die Komponente (1) nahe der Grenze (5) hiervon aufweisenden Folie (7) erhalten wird, vorteilhafterweise eine Dicke weniger als ½ und bevorzugt weniger als ein ¼ der Dicke der Komponente (1) wird.

4. Verfahren gemäß einem der vorangegangen Ansprüche, **dadurch gekennzeichnet, dass** es eine aus Metall hergestellte Komponente (1) ist, die an das Faserverbundlaminat (3) gesichert wird.

5. Verfahren gemäß Anspruch 4, **dadurch gekennzeichnet, dass** es eine aus Aluminium hergestellte Komponente (1) ist, die an das Faserverbundlaminat (3) gesichert wird.

6. Verfahren gemäß einem der vorangegangen Ansprüche, **dadurch gekennzeichnet, dass** es eine Folie (7) aus Metall ist, die zwischen die Komponente (1) und das Laminat (3) eingefügt wird.

7. Verfahren gemäß einem der vorangegangen Ansprüche, **dadurch gekennzeichnet, dass** es eine Folie (7) aus einem im Wesentlichen den gleichen Wärmeausdehnungskoeffizienten wie das Laminat (3) aufweisenden Material ist, die zwischen die Komponente
(1) und das Laminat (3) eingefügt wird.

8. Verfahren gemäß einem der vorangegangen Ansprüche, **dadurch gekennzeichnet, dass** es eine Folie (7) aus Stahl, Titan oder Invar ist, die zwischen die Komponente
(1) und das Laminat (3) eingefügt wird.

9. Verfahren gemäß einem der vorangegangen Ansprüche, **dadurch gekennzeichnet, dass** die Komponente (1) an ein eine Vielzahl von Lagen (4) aufweisendes Laminat (3) gesichert ist, wobei jede Lage (4) im Wesentlichen parallele, in eine Matrix eingebettete Kohlefasern aufweist.

10. Verfahren gemäß Anspruch 9, **dadurch gekennzeichnet, dass** die Komponente (1) an ein Kohlefaser-Epoxy-Laminat (3) gesichert wird.

11. Verfahren gemäß einem der vorangegangen Ansprüche, **dadurch gekennzeichnet, dass** die Komponente (1) an ein Glasfaser-Polyester-Laminat (3) gesichert wird.

12. Verfahren gemäß einem der vorangegangen Ansprüche, **dadurch gekennzeichnet, dass** eine Vielzahl der Folien (7', 7'', 7''') übereinander gelegt und adhäsiv zueinander gebunden und zwischen die Komponente (1) und das Laminat (3) als eine Baugruppe eingefügt werden, und **dadurch**, dass die äußeren Folien (7'_{,} 7''') der Baugruppe entsprechend an die Komponente (1) und das Laminat (3) derart adhäsiv angebunden werden, dass, für benachbarte Folien, die Grenze (8', 8'') der am nächsten zur Komponente (1) gelegenen Folie (7', 7'') in einem geringeren Abstand zur Grenze (5) der Komponente gelegen ist als die Grenze (8'', 8''') der anderen Folie (7'', 7''').

13. Verfahren gemäß einem der Ansprüche 1 bis 11, **dadurch gekennzeichnet, dass** eine Folie (7), die eine zwischen der Grenze (5) der Komponente und der Grenze (8) der Folie schrittweise reduzierte Dicke aufweist, adhäsiv am Laminat (3) und an der Komponente (1) angebunden ist.

14. Verfahren gemäß einem der vorangegangen Ansprüche, **dadurch gekennzeichnet, dass** es eine, eine Dicke von 0, 5-2 mm aufweisende Folie (7) ist, die zwischen die Komponente (1) und das Laminat (3) eingefügt ist, und so dass der Abstand der Grenze (8) der Folie (7) zu der Grenze der Komponente (1) zumindest 2 mm beträgt, bevorzugt 2-8 mm.

15. Verfahren gemäß einem der vorangegangen Ansprüche, **dadurch gekennzeichnet, dass** die Folie (7) in einem Schritt durch eine adhäsive Bindung am Laminat (3) fixiert wird, und die Komponente (1) in einem nachfolgenden separaten Schritt durch eine adhäsive Bindung an der Folie (7) fixiert wird.

16. Verfahren gemäß einem der vorangegangen Ansprüche, **dadurch gekennzeichnet, dass** die Komponente (1) an einem eine Verstärkungsabdeckung eines Sandwich-Aufbaus (13) ausbildenden Laminat (3) gesichert wird.

17. Verfahren gemäß den Ansprüchen 15 und 16, **dadurch gekennzeichnet, dass** die Folie (7) am Laminat (3) im gleichen Schritt adhäsiv angebunden wird wie der Sandwich-Aufbau (13) gebacken wird.

18. Verfahren gemäß Anspruch 16 oder 17, **dadurch gekennzeichnet, dass** die Komponente ein sogenannter Einsatz (12) ist, der durch die Dicke des Sandwich-Aufbaus (13) eingesetzt wird, und **dadurch**, dass die, die Funktion einer Unterlage aufweisende Folie (7) verwendet wird, wenn der Einsatz an eine Außenfläche des durch das Laminat (3) ausgebildeten Sandwich-Aufbaus gesichert wird.

19. Verfahren gemäß einem der Ansprüche 1 bis 17, **dadurch gekennzeichnet, dass** die Komponente (1) derart am Laminat (3) nahe einer Grenze (9) hiervon gesichert wird, dass sie über die Grenze (9) des Laminats (3) hinaus hervorsteht.

20. Verfahren gemäß Anspruch 19, **dadurch gekennzeichnet, dass** die Folie (7) derart an das Laminat (3) adhäsiv angebunden wird, dass ein Abschnitt hiervon mit einer reduzierten Dicke bezüglich dem Rest der Folie (7) in der Region nahe der Grenze (9) des Laminats derart gelegen ist, dass die Komponente an eine in einem Abstand von der Grenze (9) des Laminats endenden Fläche der Folie (7) adhäsiv angebunden ist.

21. Verwendung des Verfahrens gemäß einem der vorangegangen Ansprüche als Teil eines Vorgangs zum Herstellen eines im Weltraum zu verwendenden Produkts.

## Revendications

1. Procédé pour fixer un composant (1) de grande rigidité à un stratifié composite fibreux (3) par liaison adhésive, **caractérisé en ce qu'**une feuille (7) ayant une rigidité sensiblement inférieure à la rigidité du composant (1) est intercalée entre le composant (1) et le stratifié (3) de sorte que la feuille (7) s'étende et ait son bord (8) sensiblement au-delà du bord (5) du composant (1), le bord (8) de ce dernier chevauchant le stratifié (3), et la feuille (7) est fixée par liaison adhésive au stratifié (3) ainsi qu'au composant (1) pour les fixer l'un à l'autre.

2. Procédé selon la revendication 1, **caractérisé en ce qu'**il s'agit d'une dite feuille (7) ayant une rigidité du même ordre de grandeur que la rigidité d'une couche de stratifié (4) à laquelle elle est fixée par liaison adhésive, qui est intercalée entre le composant (1) et le stratifié (3).

3. Procédé selon la revendication 1 ou 2, **caractérisé en ce que** la rigidité inférieure de ladite feuille (7) par rapport audit composant (1) est sensiblement obtenue à l'aide d'une feuille (7) d'une épaisseur sensiblement inférieure à celle du composant (1) à proximité de son dit bord (5), avantageusement d'une épaisseur inférieure à ½, de préférence inférieure à ¼, de ladite épaisseur du composant (1).

4. Procédé selon l'une quelconque des revendications précédentes, **caractérisé en ce qu'**il s'agit d'un composant (1) fabriqué en métal qui est fixé au stratifié composite fibreux (3).

5. Procédé selon la revendication 4, **caractérisé en ce qu'**il s'agit d'un composant (1) formé d'aluminium qui est fixé au stratifié composite fibreux (3).

6. Procédé selon l'une quelconque des revendications précédentes, **caractérisé en ce qu'**il s'agit d'une feuille (7) de métal qui est intercalée entre le composant (1) et le stratifié (3).

7. Procédé selon l'une quelconque des revendications précédentes, **caractérisé en ce qu'**il s'agit d'une feuille (7) d'un matériau ayant sensiblement le même coefficient de dilatation thermique que ledit stratifié (3), qui est intercalée entre le composant (1) et le stratifié (3).

8. Procédé selon l'une quelconque des revendications précédentes, **caractérisé en ce qu'**il s'agit d'une feuille (7) d'acier, de titane ou d'invar qui est intercalée entre le composant (1) et le stratifié (3).

9. Procédé selon l'une quelconque des revendications précédentes, **caractérisé en ce que** ledit composant (1) est fixé à un stratifié (3) ayant une pluralité de couches (4), chaque couche (4) ayant des fibres de carbone sensiblement parallèles noyées dans une matrice.

10. Procédé selon la revendication 9, **caractérisé en ce que** ledit composant (1) est fixé à un stratifié époxy à fibres de carbone (3).

11. Procédé selon l'une quelconque des revendications précédentes, **caractérisé en ce que** le composant (1) est fixé à un stratifié de polyester à fibres de verre (3).

12. Procédé selon l'une quelconque des revendications précédentes, **caractérisé en ce qu'**une pluralité desdites feuilles (7', 7", 7"') sont superposées et fixées par liaison adhésive l'une à l'autre et intercalées entre le composant (1) et le stratifié (3) sous la forme d'un paquet, et les feuilles externes (7', 7"') dudit paquet sont fixées par liaison adhésive au composant (1) et au stratifié (3), respectivement, de sorte que, pour des feuilles adjacentes, ledit bord (8', 8") de la feuille (7', 7") le plus proche du composant (1) soit situé à une distance plus courte dudit bord (5) du composant que ledit bord (8", 8"') de l'autre feuille (7", 7"').

13. Procédé selon l'une quelconque des revendications 1 à 11, **caractérisé en ce qu'**une feuille (7) ayant une épaisseur réduite par étapes entre ledit bord (5) du composant et ledit bord (8) de la feuille est fixée par liaison adhésive au stratifié (3) et au composant (1).

14. Procédé selon l'une quelconque des revendications précédentes, **caractérisé en ce qu'**une feuille (7) d'une épaisseur de 0,5 à 2 mm est intercalée entre le composant (1) et le stratifié (3) et de sorte que la distance entre ledit bord (8) de la feuille (7) et ledit bord (5) du composant (1) soit d'au moins 2 mm, de préférence de 2 à 8 mm.

15. Procédé selon l'une quelconque des revendications précédentes, **caractérisé en ce que** la feuille (7) est fixée dans une étape au stratifié (3) par liaison adhésive et le composant (1) est fixé dans une étape séparée suivante à la feuille (7) par liaison adhésive.

16. Procédé selon l'une quelconque des revendications précédentes, **caractérisé en ce que** le composant (1) est fixé à un stratifié (3) formant une couverture de renforcement d'une construction en sandwich (13).

17. Procédé selon les revendications 15 et 16, **caractérisé en ce que** la feuille (7) est fixée par liaison adhésive au stratifié (3) dans la même étape que la construction en sandwich (13) est durcie.

18. Procédé selon la revendication 16 ou 17, **caractérisé en ce que** ledit composant est ce que l'on appelle un insert (12) introduit à travers l'épaisseur de ladite construction en sandwich (13) et une dite feuille (7) ayant le caractère d'une rondelle est utilisée lors de la fixation de l'insert à une surface externe de la construction en sandwich formée par ledit stratifié (3).

19. Procédé selon l'une quelconque des revendications 1 à 17, **caractérisé en ce que** ledit composant (1) est fixé au stratifié (3) à proximité d'un de ses bords (9) de sorte qu'il fasse saillie au-delà du bord (9) du stratifié (3").

20. Procédé selon la revendication 19, **caractérisé en ce qu'**une dite feuille (7) est fixée par liaison adhésive au stratifié (3) de sorte qu'une portion (10) de celle-ci d'une épaisseur réduite par rapport au reste de la feuille (7) soit située dans la région proche dudit bord (9) du stratifié, afin que le composant soit fixé par liaison adhésive à une surface de la feuille (7) se terminant à une certaine distance dudit bord (9) du stratifié.

21. Utilisation d'un procédé selon l'une quelconque des revendications précédentes en tant que partie d'un procédé de production d'un produit à utiliser dans l'espace.
